# EUROPEAN PATENT APPLICATION

(11) **EP 4 071 863 A1**
(43) Date of publication of application: **12.10.2022**
(21) Application number: 19955360.3
(22) Date of filing: 02.12.2019
(51) Int. Cl.: H01M 4/66

(54) **HIGH-ORIENTATION COLLECTOR FOR LITHIUM ION BATTERY, FABRICATION METHOD THEREFOR AND APPLICATION THEREOF**

(71) Applicant: Hefei Gotion High-Tech Power Energy Co., Ltd., Hefei, Anhui 230012 (CN)
(72) Inventor: ZHANG, Ya, Hefei, Anhui 230012 (CN); CHENG, Qian, Hefei, Anhui 230012 (CN); CAI, Steven, Hefei, Anhui 230012 (CN); LI, Chen, Hefei, Anhui 230012 (CN)
(74) Representative: Novagraaf Technologies
(86) International application number: PCT/CN2019/122333
(87) International publication number: WO 2021/108946

(57) **Abstract**

Disclosed are a high-orientation collector for a lithium-ion battery, a manufacturing method therefor and an application thereof. The collector is made of a resin material added with conductive particles. The conductive particles of the collector in an X-Y direction do not form a sufficient conductive network, but form a good conductive network in a Z direction. While a short circuit occurs, the collector is not easy to activate most of active materials in the X-Y direction so that thermal runaway is not easy to occur, but the collector may fully conduct electricity in the Z direction so that the battery may be normally charged and discharged, thereby improving battery safety.

## Description

### Technical Field

The present disclosure relates to a high-orientation collector for a lithium-ion battery, a manufacturing method therefor and an application thereof.

### Background

In the past two decades, lithium-ion batteries become the most important power source for new energy vehicles. In order to make it widely available, it is necessary to further reduce the cost of the lithium-ion batteries while its performance is improved. In addition, in order to improve the driving mileage of electric vehicles, the industry still pursues the lithium-ion batteries with the higher energy density continuously. For the design of the electric vehicles, compared to the improvement of the energy density of a single cell, the improvement of the energy density of the entire Pack may meet the requirements of the electric vehicles for a Pack design in the case of guaranteeing the safety. In addition, an existing battery pack design is composed of Cell→Module→Pack, and the complexity and space utilization rate of the design are further increased.

### Summary

A purpose of the present disclosure is to provide a method for preparing a high-orientation collector with simple operation and large area.

Another purpose of the present disclosure is to provide a high-orientation collector prepared by the above method.

Another purpose of the present disclosure is to provide an application of the above collector.

The present disclosure is achieved by the following technical schemes.

In one aspect, the present disclosure provides a collector, and it is made of a resin material added with conductive particles.

In the collector of the present disclosure, the conductive particles and the resin material are distributed at intervals, herein the conductive particles form a conductive path; in an X-Y direction, the number of the conductive particles forming the conductive path does not exceed 20% of the total number (number) of the conductive particles; and in a Z direction, the number of the conductive particles forming the conductive path is not less than 60% of the total number (number) of the conductive particles.

According to a specific scheme of the present disclosure, in the collector of the present disclosure, the material of the conductive particles may be carbon material nanoparticles, for example, one or a combination of two or more of a carbon black, a ketjen black, a carbon nanotube, a graphene, a carbon fiber, a vapor growth carbon fiber (VGCF) and the like. Herein the particle size of the graphene is 5 nm-100 nm; the particle size of the carbon black and the ketjen black is 1 nm-100 nm; the carbon nanotube may be selected from a single-wall carbon nanotube or a multi-wall carbon nanotube, the diameter is 1 nm-5 nm, and the length is 10 nm-500 nm; the diameter of the carbon fiber and VGCF is 80 nm-200 nm, Brunauer-Emmett-Teller (BET) is 5 m²/g-30 m²/g, and the length is 200 nm-5 µm. While two or more combined carbon materials are used, the solid content of the carbon material is 10wt%-70wt%, for example, it may be a mixture of graphene + carbon nanotube, or a mixture of carbon black + ketjen black, or a mixture of carbon black + ketjen black + carbon nanotube.

In the collector of the present disclosure, a polyolefin-based material may be used as the resin material (organic matrix). For example, a copolymer or a mixture formed by one or a combination of two or more of a high-density polyethylene, a low-density polyethylene, a polypropylene, a polybutene, a polymethylpentene and the like. According to the relative density, it is divided into the low-density polyethylene (LDPE) and the high-density polyethylene (HDPE), the density of LDPE is 0.91-0.925 g/cm³ and the density of HDPE is >0.94 g/cm³.

The above resin material is more stable in potential relative to a positive electrode and a negative electrode, and has the lower density than the metal, so it is beneficial to improve the weight energy density of the battery. For example, charge-discharge voltage range: 2.5-3.8V (LiFePO₄ (LFP)); 2.5-4.2V (Nickel-Cobalt-Manganese (NCM)); positive compaction density: 2.3-2.6 g/cc (LFP); 3.5-3.8 g/cc (NCM); and negative compaction density: 1.3-1.7 g/cc (graphite).

In the collector of the present disclosure, the volume percentage of the spherical metal particles accounting for the collector is 30wt%-70wt%.

The thickness of the high-orientation resin collector of the present disclosure is preferably 5-30 µm. More preferably, the thickness of the collector is less than 20 µm, preferably less than 15 µm, and more preferably less than 10 µm.

In the collector of the present disclosure, the conductive particles form the conductive path of which the width is 500 nm-5 µm; adjacent conductive paths are filled with the resin material, the resin material is non-conductive, and the distance between the adjacent conductive paths is 500 nm-5 µm.

According to a specific implementation scheme of the present disclosure, the surface impedance of the collector of the present disclosure is lower than 15 mohm/sq, or lower than 10 mohm/sq.

The collector of the present disclosure adopts the resin filled with the conductive particles as the collector, and has the lower conductivity in the X-Y direction and the higher conductivity in the Z direction. While a short circuit occurs, only a few active materials may be activated in the X-Y direction, and thermal runaway may not eventually occur. In the present disclosure, the X-Y direction is a horizontal direction of the collector, and the Z direction is a thickness direction of the collector.

The density of the collector of the present disclosure is lower than that of the metal, and a higher weight energy density may be achieved. The density of the collector is <0.7 g/cc, the energy density of LFP (lithium iron phosphate battery) may be >190 Wh/kg, and the energy density of NCM (nickel-cobalt-manganate lithium battery) may be >300Wh/kg.

On the other hand, the present disclosure further provides a preparation method for the high-orientation collector, the method is mainly to prepare a high-orientation resin collector by a melt stretching method, including:
heating a resin to above the melting temperature, and mixing it with conductive particles uniformly; and
extruding a molten mixture added with the conductive particles into a rotated cooling roller, rapidly increasing the viscosity of the mixture while cooled to form a film, and then stretching the film to the corresponding thickness and internal structure by a group of stretching rollers.

Both the thickness and the orientation degree of the collector of the present disclosure depend on the ratio of the resin to the conductive particles, the preheating temperature of a melting furnace and the stretching rate of a mechanical drum.

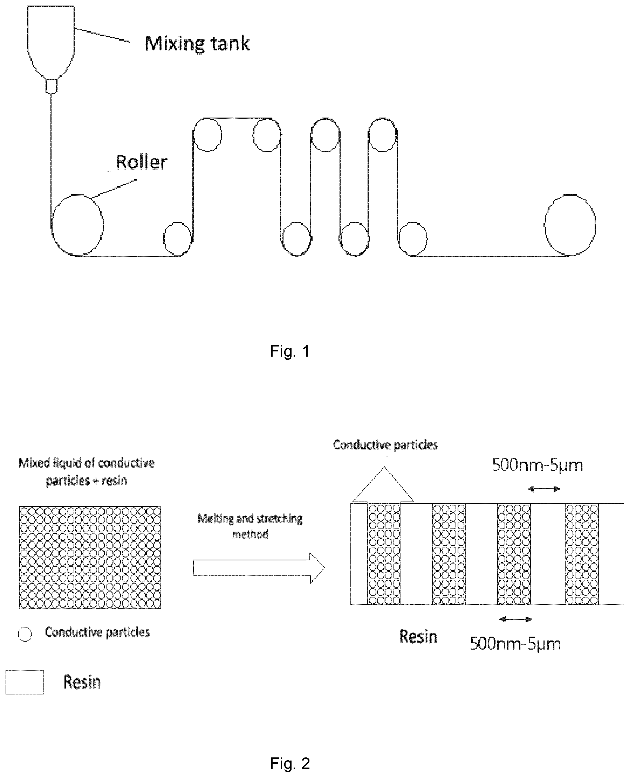

A high-orientation resin collector with a specific conductive path structure is formed by the melt stretching method (Fig. 2).

According to a specific embodiment of the present disclosure, the preheating temperature of the melting furnace may be 60°C-80°C.

According to a specific embodiment of the present disclosure, the stretching speed of the mechanical drum may be 5 m/min-30 m/min, and the stretching tension may be 40 N-80 N.

In the preparation method of the present disclosure, by controlling the stretching of the mechanical drum, the collector is stretched transversely, and the spacing distance between the particles may be controlled, thereby the width of the conductive path is controlled. In a specific embodiment of the present disclosure, the width of the conductive path is controlled to be 500 nm-5 µm.

On the other hand, the present disclosure further provides an application of the collector.

The collector of the present disclosure may be used to prepare a lithium-ion battery. While the lithium-ion battery is prepared, the design of a single cell stacked in series may save a connection electrode piece between the single batteries, improve the volume efficiency, and be suitable for vehicle use.

In the present disclosure, the resin using the conductive particles as a filler is used to prepare the collector, and the collector is characterized in that the conductive particles in the X-Y direction do not form a sufficient conductive network, but form a good conductive network in the Z direction. In this way, while a short circuit occurs, the collector is not easy to activate most of active materials in the X-Y direction so that thermal runaway does not occur easily, but may conduct electricity sufficiently in the Z direction, so that the battery may be charged and discharged normally. Thus, the battery safety is improved.

### Brief Description of the Drawings

Fig. 1 is a flow diagram of a preparation process of a collector of Embodiment 1.
Fig. 2 is a schematic diagram of a process for forming a high-orientation collector with a conductive path structure.

### Detailed Description of the Embodiments

In order to have clearer understanding of technical features, purposes and beneficial effects of the present disclosure, technical schemes of the present disclosure are now described in detail below in combination with the drawings and specific embodiments. It should be understood that these embodiments are only used to describe the present disclosure and not to limit a scope of the present disclosure. In the embodiments, experimental methods without specific conditions are conventional methods and conventional conditions well-known in the field, or operated in accordance with conditions suggested by instrument manufacturers.

### Contrast example 1

Positive electrode: LFP (10 µm)
Negative electrode: artificial graphite (20 µm)
Diaphragm: 12 µm PE + 2 µm Al₂O₃
Size: 600L×300W×1Tmm single cell structure
Collector: positive electrode (Al, 12 µm in thickness); and negative electrode (Cu, 8 µm in thickness)
Acupuncture experiment: at a temperature of 20±5°C, a battery is in a full point state (SOC100), a steel needle with a diameter of 3 mm is used to penetrate rapidly in a direction perpendicular to an electrode plate, and the steel needle stays in it.

### Embodiment 1

This embodiment provides a lithium-ion battery, and it includes:
Positive electrode: LFP (10 µm)
Negative electrode: artificial graphite (20 µm)
Diaphragm: 12 µm PE+2 µm Al₂O₃
Size: 600L×300W×1Tmm single cell structure
Collector: positive electrode (50wt% carbon black (60 nm) + 50wt% PP, 15 µm in thickness); negative electrode (50wt% carbon black (60 nm) + 50wt% PP, 5 µm in thickness).

Collector for positive electrode: in the X-Y direction, the number of the conductive particles forming the conductive path does not exceed 20% of the total number of the conductive particles (the resistivity in the X-Y direction is 5 mohm/sq); and in the Z direction, the number of the conductive particles forming the conductive path is not less than 70% of the total number of the conductive particles (the resistivity in the Z direction is 1 mohm/sq), the width of the conductive path formed by the conductive particles is 1 µm, and the distance between the adjacent conductive paths is 1 µm, it may be specifically shown in Fig. 2. The collector is prepared according to the following steps, as shown in Fig. 1:
a resin is heated to above the melting temperature, and mixed with conductive particles uniformly, and the preheating temperature of a melting furnace is 80°C; and
a molten mixture added with the conductive particles is extruded to a rotated cold roller, the viscosity of the mixture is rapidly increased to form a film while cooled, and then the film is stretched by a group of stretching rollers (stretching speed: 5 m/min, and the stretching tension is 50 N), to obtain the collector with a thickness of 15 µm and a surface impedance of 7 mohm/sq.

Collector for negative electrode: in the X-Y direction, the number of the conductive particles forming the conductive path does not exceed 20% of the total number of the conductive particles (the resistivity in the X-Y direction is 5 mohm/sq); and in the Z direction, the number of the conductive particles forming the conductive path is not less than 70% of the total number of the conductive particles (the resistivity in the Z direction is 1 mohm/sq), the width of the conductive path formed by the conductive particles is 1 µm, and the distance between the adjacent conductive paths is 1 µm. The collector is prepared according to the following steps, as shown in Fig. 1:
a resin is heated to above the melting temperature, and mixed with conductive particles uniformly, and the preheating temperature of a melting furnace is 80°C; and
a molten mixture added with the conductive particles is extruded to a rotated cold roller, the viscosity of the mixture is rapidly increased to form a film while cooled, and then the film is stretched by a group of stretching rollers (stretching speed: 5 m/min, and the stretching tension is 50 N), to obtain the collector with a thickness of 15 µm and a surface impedance of 7 mohm/sq.

Acupuncture experiment: at a temperature of 20±5°C, a battery is in a full point state (SOC100), a steel needle with a diameter of 3 mm is used to penetrate rapidly in a direction perpendicular to an electrode plate, and the steel needle stays in it.

### Embodiment 2

This embodiment provides a lithium-ion battery, and it includes:
Positive electrode: LFP (10 µm)
Negative electrode: artificial graphite (20 µm)
Diaphragm: 12 µm PE+2 µm Al₂O₃
Size: 600L×300W×1Tmm single cell structure
Collector: positive electrode (50wt% carbon black (60 nm) + 50wt% PP, 15 µm in thickness); negative electrode (50wt% Ni particle (1 µm) + 50wt% PP, 15 µm in thickness).

Collector for positive electrode: in the X-Y direction, the number of the conductive particles forming the conductive path does not exceed 10% of the total number of the conductive particles (the resistivity in the X-Y direction is 8 mohm/sq); and in the Z direction, the number of the conductive particles forming the conductive path is not less than 70% of the total number of the conductive particles (the resistivity in the Z direction is 1 mohm/sq), the width of the conductive path formed by the conductive particles is 1 µm, and the distance between the adjacent conductive paths is 1.3 µm. The collector is prepared according to the following steps:
a resin is heated to above the melting temperature, and mixed with conductive particles uniformly, and the preheating temperature of a melting furnace is 80°C; and
a molten mixture added with the conductive particles is extruded to a rotated cold roller, the viscosity of the mixture is rapidly increased to form a film while cooled, and then the film is stretched by a group of stretching rollers (stretching speed: 5 m/min, and the stretching tension is 60 N), to obtain the collector with a thickness of 15 µm and a surface impedance of 10 mohm/sq.

Collector for negative electrode: in the X-Y direction, the number of the conductive particles forming the conductive path does not exceed 10% of the total number of the conductive particles (the resistivity in the X-Y direction is 8 mohm/sq); and in the Z direction, the number of the conductive particles forming the conductive path is not less than 70% of the total number of the conductive particles (the resistivity in the Z direction is 1 mohm/sq), the width of the conductive path formed by the conductive particles is 1 µm, and the distance between the adjacent conductive paths is 1.3 µm. The collector is prepared according to the following steps:
a resin is heated to above the melting temperature, and mixed with conductive particles uniformly, and the preheating temperature of a melting furnace is 80°C; and
a molten mixture added with the conductive particles is extruded to a rotated cold roller, the viscosity of the mixture is rapidly increased to form a film while cooled, and then the film is stretched by a group of stretching rollers (stretching speed: 5 m/min, and the stretching tension is 60 N), to obtain the collector with a thickness of 15 µm and a surface impedance of 13 mohm/sq.

Acupuncture experiment: at a temperature of 20±5°C, a battery is in a full point state (SOC100), a steel needle with a diameter of 3 mm is used to penetrate rapidly in a direction perpendicular to an electrode plate, and the steel needle stays in it.

### Embodiment 3

This embodiment provides a lithium-ion battery, and it includes:
Positive electrode: LFP (10 µm)
Negative electrode: artificial graphite (20 µm)
Diaphragm: 12 µm PE+2 µm Al₂O₃
Size: 600L×300W×1Tmm single cell structure
Collector: positive electrode (40wt% carbon black (60 nm) + 10wt% ketjen black (30 nm) + 50wt% PP, 15 µm in thickness); negative electrode (50wt% Ni particle (1 µm) + 50wt% PP, 15 µm in thickness).

Collector for positive electrode: in the X-Y direction, the number of the conductive particles forming the conductive path does not exceed 20% of the total number of the conductive particles (the resistivity in the X-Y direction is 6 mohm/sq); and in the Z direction, the number of the conductive particles forming the conductive path is not less than 70% of the total number of the conductive particles (the resistivity in the Z direction is 1 mohm/sq), the width of the conductive path formed by the conductive particles is 1 µm, and the distance between the adjacent conductive paths is 1 µm. The collector is prepared according to the following steps:
a resin is heated to above the melting temperature, and mixed with conductive particles uniformly, and the preheating temperature of a melting furnace is 80°C; and
a molten mixture added with the conductive particles is extruded to a rotated cold roller, the viscosity of the mixture is rapidly increased to form a film while cooled, and then the film is stretched by a group of stretching rollers (stretching speed: 5 m/min, and the stretching tension is 50 N), to obtain the collector with a thickness of 15 µm and a surface impedance of 4 mohm/sq.

Collector for negative electrode: in the X-Y direction, the number of the conductive particles forming the conductive path does not exceed 17% of the total number of the conductive particles (the resistivity in the X-Y direction is 6 mohm/sq); and in the Z direction, the part (number) of the conductive particles forming the conductive path is not less than 70% of the total number of the conductive particles (the resistivity in the Z direction is 1 mohm/sq), the width of the conductive path formed by the conductive particles is 1 µm, and the distance between the adjacent conductive paths is 1.3 µm. The collector is prepared according to the following steps:
a resin is heated to above the melting temperature, and mixed with conductive particles uniformly, and the preheating temperature of a melting furnace is 80°C; and
a molten mixture added with the conductive particles is extruded to a rotated cold roller, the viscosity of the mixture is rapidly increased to form a film while cooled, and then the film is stretched by a group of stretching rollers (stretching speed: 5 m/min, and the stretching tension is 60 N), to obtain the collector with a thickness of 15 µm and a surface impedance of 13 mohm/sq.

Acupuncture experiment: at a temperature of 20±5°C, a battery is in a full point state (SOC100), a steel needle with a diameter of 3 mm is used to penetrate rapidly in a direction perpendicular to an electrode plate, and the steel needle stays in it.

### Embodiment 4

This embodiment provides a lithium-ion battery, and it includes:
Positive electrode: LFP (10 µm)
Negative electrode: artificial graphite (20 µm)
Diaphragm: 12 µm PE+2 µm Al₂O₃
Size: 600L×300W×1Tmm single cell structure
Collector: positive electrode (30wt% graphene (1 µm) + 10wt% ketjen black (30 nm) + 10% carbon nanotube (3 nm in diameter, and 100 nm in length) + 50wt% PP, 15 µm in thickness); negative electrode (50wt% Ni particle (1 µm) + 50wt% PP, 10 µm in thickness).

Collector for positive electrode: in the X-Y direction, the number of the conductive particles forming the conductive path does not exceed 20% of the total number of the conductive particles (the resistivity in the X-Y direction is 8 mohm/sq); and in the Z direction, the number of the conductive particles forming the conductive path is not less than 70% of the total number of the conductive particles (the resistivity in the Z direction is 1 mohm/sq), the width of the conductive path formed by the conductive particles is 1 µm, and the distance between the adjacent conductive paths is 1 µm. The collector is prepared according to the following steps:
a resin is heated to above the melting temperature, and mixed with conductive particles uniformly, and the preheating temperature of a melting furnace is 80°C; and
a molten mixture added with the conductive particles is extruded to a rotated cold roller, the viscosity of the mixture is rapidly increased to form a film while cooled, and then the film is stretched by a group of stretching rollers (stretching speed: 5 m/min, and the stretching tension is 50 N), to obtain the collector with a thickness of 15 µm and a surface impedance of 3 mohm/sq.

Collector for negative electrode: in the X-Y direction, the number of the conductive particles forming the conductive path does not exceed 10% of the total number of the conductive particles (the resistivity in the X-Y direction is 8 mohm/sq); and in the Z direction, the number of the conductive particles forming the conductive path is not less than 70% of the total number of the conductive particles (the resistivity in the Z direction is 1 mohm/sq), the width of the conductive path formed by the conductive particles is 1 µm, and the distance between the adjacent conductive paths is 1.3 µm. The collector is prepared according to the following steps:
a resin is heated to above the melting temperature, and mixed with conductive particles uniformly, and the preheating temperature of a melting furnace is 80°C; and
a molten mixture added with the conductive particles is extruded to a rotated cold roller, the viscosity of the mixture is rapidly increased to form a film while cooled, and then the film is stretched by a group of stretching rollers (stretching speed: 5 m/min, and the stretching tension is 60 N), to obtain the collector with a thickness of 10 µm and a surface impedance of 15 mohm/sq.

Acupuncture experiment: at a temperature of 20±5°C, a battery is in a full point state (SOC100), a steel needle with a diameter of 3 mm is used to penetrate rapidly in a direction perpendicular to an electrode plate, and the steel needle stays in it.

### Embodiment 5

This embodiment provides a lithium-ion battery, and it includes:
Positive electrode: LFP (10 µm)
Negative electrode: artificial graphite (20 µm)
Diaphragm: 12 µm PE+2 µm Al₂O₃
Size: 600L×300W×1Tmm single cell structure
Collector: positive electrode (50wt% carbon black (60 nm) + 50wt% PE, 15 µm in thickness); negative electrode (30wt% graphene (1 µm) + 10wt% ketjen black (30 nm) + 10% carbon nanotube (3 nm in diameter, and 100 nm in length) + 50wt% PP, 15 µm in thickness).

Collector for positive electrode: in the X-Y direction, the number of the conductive particles forming the conductive path does not exceed 20% of the total number of the conductive particles (the resistivity in the X-Y direction is 8 mohm/sq); and in the Z direction, the number of the conductive particles forming the conductive path is not less than 70% of the total number of the conductive particles (the resistivity in the Z direction is 1 mohm/sq), the width of the conductive path formed by the conductive particles is 1 µm, and the distance between the adjacent conductive paths is 1 µm. The collector is prepared according to the following steps:
a resin is heated to above the melting temperature, and mixed with conductive particles uniformly, and the preheating temperature of a melting furnace is 80°C; and
a molten mixture added with the conductive particles is extruded to a rotated cold roller, the viscosity of the mixture is rapidly increased to form a film while cooled, and then the film is stretched by a group of stretching rollers (stretching speed: 5 m/min, and the stretching tension is 50 N), to obtain the collector with a thickness of 15 µm and a surface impedance of 7 mohm/sq.

Collector for negative electrode: in the X-Y direction, the number of the conductive particles forming the conductive path does not exceed 20% of the total number of the conductive particles (the resistivity in the X-Y direction is 8 mohm/sq); and in the Z direction, the number of the conductive particles forming the conductive path is not less than 70% of the total number of the conductive particles (the resistivity in the Z direction is 1 mohm/sq), the width of the conductive path formed by the conductive particles is 1 µm, and the distance between the adjacent conductive paths is 1 µm. The collector is prepared according to the following steps:
a resin is heated to above the melting temperature, and mixed with conductive particles uniformly, and the preheating temperature of a melting furnace is 80°C; and
a molten mixture added with the conductive particles is extruded to a rotated cold roller, the viscosity of the mixture is rapidly increased to form a film while cooled, and then the film is stretched by a group of stretching rollers (stretching speed: 5 m/min, and the stretching tension is 50 N), to obtain the collector with a thickness of 15 µm and a surface impedance of 3 mohm/sq.

Acupuncture experiment: at a temperature of 20±5°C, a battery is in a full point state (SOC100), a steel needle with a diameter of 3 mm is used to penetrate rapidly in a direction perpendicular to an electrode plate, and the steel needle stays in it.

### Embodiment 6

This embodiment provides a lithium-ion battery, and it includes:
Positive electrode: LFP (10 µm)
Negative electrode: artificial graphite (20 µm)
Diaphragm: 12 µm PE+2 µm Al₂O₃
Size: 600L×300W×1Tmm single cell structure
Collector: positive electrode (50wt% carbon black (60 nm) + 50wt% PP, 25 µm in thickness); negative electrode (30wt% carbon black (60 nm) + 10wt% ketjen black (30 nm) + 10% carbon nanotube (3 nm in diameter, and 100 nm in length) + 50wt% PP, 15 µm in thickness).

Collector for positive electrode: in the X-Y direction, the number of the conductive particles forming the conductive path does not exceed 20% of the total number of the conductive particles (the resistivity in the X-Y direction is 8 mohm/sq); and in the Z direction, the number of the conductive particles forming the conductive path is not less than 70% of the total number of the conductive particles (the resistivity in the Z direction is 1 mohm/sq), the width of the conductive path formed by the conductive particles is 1 µm, and the distance between the adjacent conductive paths is 1 µm. The collector is prepared according to the following steps:
a resin is heated to above the melting temperature, and mixed with conductive particles uniformly, and the preheating temperature of a melting furnace is 80°C; and
a molten mixture added with the conductive particles is extruded to a rotated cold roller, the viscosity of the mixture is rapidly increased to form a film while cooled, and then the film is stretched by a group of stretching rollers (stretching speed: 5 m/min, and the stretching tension is 50 N), to obtain the collector with a thickness of 15 µm and a surface impedance of 5 mohm/sq.

Collector for negative electrode: in the X-Y direction, the number of the conductive particles forming the conductive path does not exceed 20% of the total number of the conductive particles (the resistivity in the X-Y direction is 8 mohm/sq); and in the Z direction, the number of the conductive particles forming the conductive path is not less than 70% of the total number of the conductive particles (the resistivity in the Z direction is 1 mohm/sq), the width of the conductive path formed by the conductive particles is 1 µm, and the distance between the adjacent conductive paths is 1 µm. The collector is prepared according to the following steps:
a resin is heated to above the melting temperature, and mixed with conductive particles uniformly, and the preheating temperature of a melting furnace is 80°C; and
a molten mixture added with the conductive particles is extruded to a rotated cold roller, the viscosity of the mixture is rapidly increased to form a film while cooled, and then the film is stretched by a group of stretching rollers (stretching speed: 5 m/min, and the stretching tension is 50 N), to obtain the collector with a thickness of 15 µm and a surface impedance of 3 mohm/sq.
Acupuncture experiment: at a temperature of 20±5°C, a battery is in a full point state (SOC100), a steel needle with a diameter of 3 mm is used to penetrate rapidly in a direction perpendicular to an electrode plate, and the steel needle stays in it.

**Table 1**

| | | Contrast example1 | Embodiment 1 | Embodiment 2 | Embodiment 3 | Embodiment 4 | Embodiment 5 | Embodiment 6 |
|---|---|---|---|---|---|---|---|---|
| Positive electrode | | LFP | LFP | LFP | LFP | LFP | LFP | LFP |
| Negative electrode | | Artificial graphite | Artificial graphite | Artificial graphite | Artificial graphite | Artificial graphite | Artificial graphite | Artificial graphite |
| Collector | Positive electrode | Al, 12µm in thickness | 50wt% carbon black (60 nm) + 50wt% PP, 15 µm in thickness | 50wt% carbon black (60 nm) + 50wt% PP, 15 µm in thickness | 40wt% carbon black (60 nm) + 10wt% ketjen black (30 nm) + 50wt% PP, 15 µm in thickness | 30wt% graphene (1 µm) + 10wt% ketjen black (30 nm) + 10% carbon nanotube (3 nm in diameter, and 100 nm in length) + 50wt% PP, 15 µm in thickness | 50wt% carbon black (60 nm) + 50wt% PE, 15 µm in thickness | 50wt% carbon black (60 nm) + 50wt% PP, 25 µm in thickness |
| | Negative electrode | Cu, 8µm in thickness | 50wt% carbon black (60 nm) + 50wt% PP, 15 µm in thickness | 50wt% Ni particle (1 µm) + 50wt% PP, 15 µm in thickness | 50wt% Ni particle (1 µm) + 50wt% PP, 15 µm in thickness | 50wt% Ni particle (1 µm) + 50wt% PP, 10 µm in thickness | 30wt% graphene (1 µm) + 10wt% ketjen black (30 nm) + 10% carbon nanotube (3 nm in diameter, and 100 nm in length) + 50wt% PP, 15 µm in thickness | 30wt% carbon black (60 nm) + 10wt% ketjen black (30 nm) + 10% carbon nanotube (3 nm in diameter, and 100 nm in length) + 50wt% PP, 15 µm in thickness |
| Single cell length (mm) | | 600 | 600 | 600 | 600 | 600 | 600 | 600 |
| Single cell width (mm) | | 300 | 300 | 300 | 300 | 300 | 300 | 300 |
| Single cell height (mm) | | 1 | 1 | 1 | 1 | 1 | 1 | 1 |
| Single cell energy density (Wh/kg) | | 190 | 210 | 205 | 200 | 200 | 200 | 200 |
| Single cell energy density (Wh/L) (Wh/L) | | 390 | 390 | 390 | 390 | 390 | 390 | 380 |
| Single cell capacity (Ah) | | 66 | 60 | 66 | 66 | 66 | 59 | 58 |
| First effect (%) | | 94 | 90 | 93 | 93 | 93 | 89 | 88 |
| Cycle | | 2000 | 1000 | 2000 | 2000 | 2000 | 800 | 800 |
| EOL DCIR | | 120% | 150% | 125% | 125% | 120% | 165% | 170% |
| Pack energy density (Wh/kg) | | 152 | 160 | 164 | 164 | 164 | 164 | 164 |
| Pack energy density (Wh/L) | | 152 | 310 | 310 | 310 | 310 | 310 | 310 |
| 1C/0.1C | | 95% | 93% | 93% | 93% | 94% | 96% | 96% |
| 6C/0.1C | | 80% | 72% | 74% | 76% | 79% | 82% | 83% |
| Acupuncture experiment (HL) | | 5 | 3 | 3 | 3 | 3 | 3 | 3 |

It may be seen from Table 1 that, the resin-based collector of the present disclosure is used, the volume energy density of Pack and the safety performance of the battery are both greatly improved (acupuncture experiment).

## Claims

1. A collector, which is made of a resin material added with conductive particles, wherein in the collector, the conductive particles and the resin material are distributed at intervals, and in an X-Y direction, the number of the conductive particles forming a conductive path does not exceed 20% of the total number of the conductive particles; and in a Z direction, the number of the conductive particles forming the conductive path is not less than 60% of the total number of the conductive particles.

2. The collector according to claim 1, wherein the conductive particles comprise carbon material nanoparticles.

3. The collector according to claim 2, wherein the carbon material is selected from one or a combination of two or more of a carbon black, a ketjen black, a carbon nanotube, a graphene, a carbon fiber, and a VGCF.

4. The collector according to claim 3, wherein the particle size of the graphene is 5nm-100nm; and the particle size of the carbon black and the ketjen black is 1nm-100nm;
preferably, the carbon nanotube can be selected from a single-wall carbon nanotube or a multi-wall carbon nanotube, the diameter is 1 nm-5 nm, and the length is 10nm-500nm; and
preferably, the diameter of the carbon fiber and VGCF is 80nm-200nm, BET is 5m²/g-30m²/g, and the length is 200nm-5µm.

5. The collector according to claim 1, wherein the volume percentage of the conductive particles accounting for the collector is 30wt%-70wt%.

6. The collector according to claim 1, wherein the resin material is a polyolefin-based material, for example, a copolymer or a mixture of one or a combination of two or more of a high-density polyethylene, a low-density polyethylene, a polypropylene, a polybutene, and a polymethylpentene.

7. The collector according to claim 1, wherein the thickness is 5-30µm; and preferably, the thickness of the collector is less than 20µm, further preferably less than 15µm, and more preferably less than 10µm.

8. The collector according to claim 1, wherein the conductive particles form the conductive path with a width of 500nm-5µm; and the distance between adjacent conductive paths is 500nm-5µm.

9. The collector according to claim 1, wherein the surface impedance is lower than 15mohm/sq, preferably lower than 10mohm/sq.

10. The collector according to claim 1, wherein the density is <0.7g/cc.

11. A method for preparing the collector according to any one of claims 1-10, wherein the method comprises:
heating a resin to above the melting temperature, and mixing it with conductive particles uniformly; and
extruding a molten mixture added with the conductive particles into a rotated cooling roller, rapidly increasing the viscosity of the mixture while cooled to form a film, and then stretching the film to the corresponding thickness and internal structure by a group of stretching rollers.

12. The method according to claim 11, wherein the preheating temperature of a melting furnace is 60°C-80°C; and
preferably, the stretching speed is 5 m/min-30 m/min, and the stretching tension is 40N-80N.

13. An application of the collector according to any one of claims 1-10 in preparing a lithium ion battery.
